Europäisches Patentamt

European Patent Office

Office européen des brevets

(11) Numéro de publication: **0 218 537**
**B1**

(12) **FASCICULE DE BREVET EUROPEEN**

(45) Date de publication du fascicule du brevet: **11.04.90**

(21) Numéro de dépôt: **86430028.0**

(22) Date de dépôt: **21.08.86**

(51) Int. Cl.⁵: **E 01 C 5/00**, E 02 B 3/14,
E 04 F 15/08 // E01F8/00,
E04D11/00

(54) Element de pavé auto-bloquant.

(30) Priorité: **27.08.85 FR 8513030**
**30.07.86 FR 8611166**

(43) Date de publication de la demande:
**15.04.87 Bulletin 87/16**

(45) Mention de la délivrance du brevet:
**11.04.90 Bulletin 90/15**

(84) Etats contractants désignés:
**AT BE CH DE GB IT LI LU NL SE**

(56) Documents cités:
| | |
|---|---|
| EP-A-0 101 062 | DE-A-3 500 737 |
| WO-A-85/02872 | DE-C- 291 817 |
| BE-A- 515 227 | DE-U-7 106 393 |
| DE-A-2 449 403 | FR-A-2 112 113 |
| DE-A-2 746 047 | FR-A-2 165 315 |
| DE-A-3 116 540 | US-A-1 632 395 |

BOUWWERELD, vol. 72, no. 19, 1er octobre
1976, pages 48,49, Doetinchem, NL: "Levendige
bestratingen met trap-tile tegels"

(73) Titulaire: **Borg, Paul**
**27 avenue Anatole France "Le Mercure"**
**F-06800 Cagnes sur Mer (FR)**

(72) Inventeur: **Borg, Paul**
**27 avenue Anatole France "Le Mercure"**
**F-06800 Cagnes sur Mer (FR)**

(74) Mandataire: **Hautier, Jean-Louis**
**Cabinet Hautier Office Méditerranéen de Brevets**
**d'Invention et de Marques 24 rue Masséna**
**F-06000 Nice (FR)**

Courier Press, Leamington Spa, England.

## Description

La présente invention est relative à un élement de pavé auto-bloquant composé d'une tête se raccordant à deux pattes de jonction dont les axes de symétrie sont inclinés à 45° par rapport à l'axe de symétrie de la tête. La surface latérale de la tête est convexe et demi-cylindrique, alors que le contour périphérique de chacune des pattes de jonction est composé de deux surfaces concaves et cylindriques et d'une troisième surface qui relie les deux précédentes surfaces à chacune de leurs extrémités.

Ces pavés auto-bloquants permettent de réaliser différentes surfaces
— sensiblement horizontale, pour des zones de circulation telles que rue, trottoir, allée de jardin, cour, place zone piétonne, etc...
— inclinée pour la protection des talus par exemple,
— verticale, pour la construction de murs décoratifs.

La fabrication de ces pavés auto-bloquants peut s'effectuer de préférence en béton moulé, mais également en toute autre matière telle que, par exemple: plastique, métal, pierre, etc...

Les pavés existants présentent en général pour réaliser l'ancrage, des contours constitués de lignes brisées pas toujours très esthétiques et formant des angles assez fragiles.

D'autre part, leurs possibilités décoratives restent assez limitées.

FR—A—2.165.315 ce brevet décrit un pavé ou dalle en béton ou analogues, notamment pour la réalisation de revêtements de sols, caractérisé en ce qu'il comprend une partie inférieure ou base d'appui et une partie supérieure ou surface de roulement dont les périphéries sont constituées par des arcs de surfaces de révolution, alternativement convexe et concave, les arcs convexes desdites périphéries s'inscrivant dans des cercles concentriques.

DE—U—71 06393 ce brevet décrit des dalles en béton caractérisées par le fait que leurs contours sont définis à partir de surfaces circulaires et de deux surfaces circulaires intermédiaires. Ces pavés ont des formes géométriques et sont réalisées en quelque matière autre que du béton.

Ces pavés selon ce document sont composés d'une tête se raccordant à deux pattes de jonction dont les axes de symétrie sont inclinés par rapport à l'axe de symétrie de la tête et dont la surface latérale de la téte a une forme convexe et cylindrique, le contour de chaque patte de jonction est droit.

La présente invention réalise des éléments de pavés auto-bloquants qui permettent, par leur forme compacte et principalement arrondie, de bien s'imbriquer les uns aux autres. Les seules parties angulaires sont légèrement obtuses, ce qui les rend particulièrement résistantes.

La forme arrondie du pavé simule assez bien un pètale, ce qui permet de créer des motifs floraux remarquables et de réaliser de véritables mosaïques par le jeu des couleurs différentes.

Les chiffres et les lettres peuvent être composés grâce à un assemblage particulier de pavés de même couleur sur un fond constitué par d'autres pavés de couleur différente.

On peut ainsi personnaliser une surface par de motifs décoratifs et des inscriptions.

Il est intéressant d'écrire, par exemple, le nom d'une villa près du portail en bout d'allée, le nom d'un immeuble dans les cours attenantes, ainsi que le nom des magasins, restaurants, cinémas, etc. au droit de leur devanture dans une zone piétronne.

La prévente invention concerne également un perfectionnement à cet élément de pavé au sujet de ses caractéristiques techniques en augmentant son pouvoir auto-bloquant et ses caractéristiques esthétiques.

Pour que des pavés s'auto-bloquent mutuellement, il est nécessaire qu'ils ne puissent subir de rotation l'un par rapport à l'autre.

Les formes paraboliques, sinusoïdales par exemple, s'emboitent sans que les rotations soient possibles contrairement à la forme circulaire.

L'invention a pour objet un élément de pavé auto-bloquant, destiné à la réalisation de surface de circulation, de protection de talus et de murs décoratifs, dont ledit élément présentente une symétric axiale et est composé d'une tête se raccordant à deux pattes de jonction dont les directions sont inclinés à 45° par rapport à l'axe de symétrie de la tête et dont la surface latérale de la tête a une forme convexe et cylindrique, le contour de chaque patte de jonction est composé de deux surfaces concaves et cylindriques et d'une troisième surface à l'extrémité de chaque patte, qui relie les deux précédentes surfaces à chacune de leurs extrémités, la courbe de base du cylindre formant une partie du contour d'une patte de jonction est indentique à une premiére partie de la courbe de base du cylindre (IHG = LBM) formant le contour de la tête, la courbe de base du cylindre formant une autre partie du contour d'une patte de jonction est identique à une deuxième partie de la courbe de base du cylindre formant le contour de la tête, caractérisé par le fait que la troisième surface est cylindrique et les courbes de base formant le contour de chaque patte de jonction et le contour de la tête peuvent être réalisées par différentes courbes de rayon de courbure variable dont la forme interdit une rotation relative de deux éléments de pavés emboités.

Les revendications dépendantes concernent des pavés ayant les formes suivantes:
— La forme générale est similaire à la forme vue en coupe verticale d'une fleur de tulipe.
— La forme des courbes est une parabole.
— La forme des courbes est une sinusoïde.
— La forme des courbes est une élipse.
— La forme des courbes est une hyperbole.
— La forme des courbes est logarithmique.

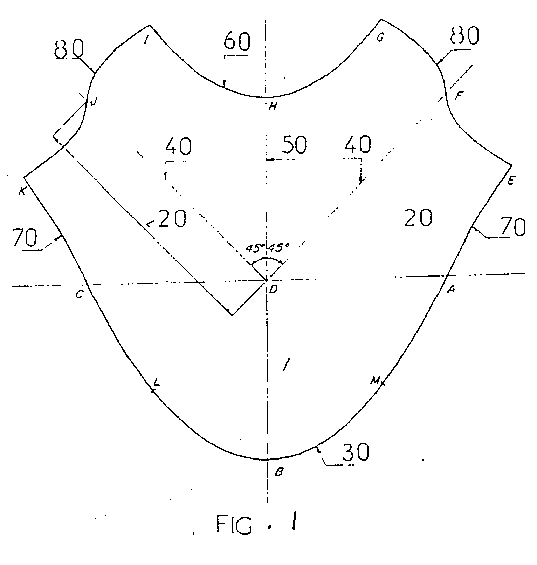

La figure 1 est une vue en plan de l'élément pavé selon l'invention.

La figure 1 détermine les caractéristiques dimensionnelles du pavé auto-bloquant. Il est composé d'une tête 1 de contour A M B L C D A et de deux pattes de jonction 2 de contour respectif D H G F E A D et D H I J K C D.

La figure 2 est une vue en coupe de deux pavés mettant en évidence un élément de jonction disposé dans le joint, par une extrémité dans les deux chanfreins des pavés, et par l'autre extrémité par un ancrage dans le béton.

Selon un mode de réalisation, la tête a une surface latérale convexe et cylindrique 30.

Les deux pattes de jonction ont des axes de symétrie 40 DF et DJ incliné à 45° par rapport à l'axe de symétrie 50 BDH de la tête.

Le contour périphérique de chaque patte de jonction est composé de deux surfaces concaves et cylindriques 60 et 70 et d'une surface 80 située à une distance L du centre D. L peut être variable.

La courbe de base du cylindre 60 est identique à une partie de la courbe de base du cylindre 30 IHG = LBM.

La courbe de base du cylindre 70 est identique à une partie de la courbe de base du cylindre 30 KC = CL et EA = AM.

Les courbes de base 30, 60 et 70, peuvent être réalisées par différentes courbes (parabole, sinusoïde, ellipse, hyperbole, courbes logarithmiques, chainette, etc., à l'exclusion du cercle).

De même, les courbes de base de la surface 80 peuvent être des courbes de même nature.

Dans le cas particulier représenté par la figure 1, les courbes 30, 60 et 70, sont des portions de parabole, de même que les courbes 80. Les deux pattes de jonction sont égales.

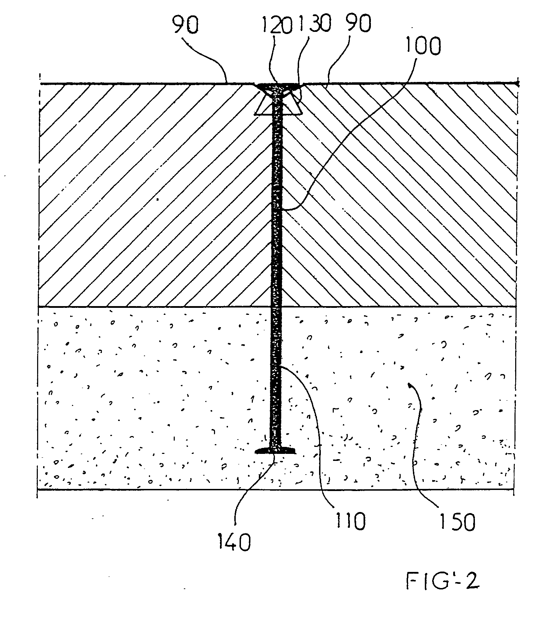

La figure 2 est une vue en coupe représentant deux pavés 90 avec un élément de jonction 100 disposé dans le joint entre les deux pavés.

Cet élément de jonction est composé d'une tige 110 de section circulaire, carrée ou oblongue et d'une ou deux têtes: une tête 120 se logeant dans les chanfreins 130 des pavés, tandis que l'autre tête 140 améliore l'ancrage dans le béton 150.

## Revendications

1. Elément de pavé auto-bloquant, destiné à la réalisation de surface de circulation, de protection de talus et de murs décoratifs, dont ledit élément présente une symétrie axiale et est composé d'une tête se raccordant à deux pattes de jonction dont les directions (40) (DF) et (DJ) sont inclinés à 45° par rapport à l'axe de symétrie (50) (BDH) de la tête et dont la surface latérale de la tête a une forme convexe et cyclindrique (30), le contour de chaque patte de jonction est composé de deux surfaces concaves et cylindriques (60, 70) et d'une troisième surface (80) à l'extrémité de chaque patte, qui relie les deux précédentes surfaces à chacune de leurs extrémités; la courbe de base du cylindre (60) formant une partie du contour d'une patte de jonction est identique à une première partie de la courbe de base du cylindre (30) IHG = LBM formant le contour de la tête; la courbe de base du cylindre (70) formant une autre partie du contour d'une patte de jonction est identique à une deuxième partie de la courbe de base du cylindre (30) KC = CL et EA = AM formant le contour de la tête caractérisé par le fait que la troisième surface (80) est cylindrique et les courbes de base (30), (60), (70) et (80) formant le contour de chaque patte de jonction et le contour de la tête peuvent être réalisées par différentes courbes de rayon de courbure variable dont la forme interdit une rotation relative de deux éléments de pavés emboités.

2. Elément de pavé selon la revendication 1 caractérisé par le fait que la forme générale est similaire à la forme vu en coupe verticale d'une fleur de tulipe.

3. Elément de pavé ou élément en forme de pavé selon la revendication 1 caractérisé par le fait que la forme des courbes (30, 60, 70, 80) est une parabole.

4. Elément de pavé ou élément en forme de pavé selon la revendication 1 caractérisé par le fait que la forme des courbes (30, 60, 70, 80) est une sinusoïde.

5. Elément de pavé ou élément en forme de pavé selon la revendication 1 caractérisé par le fait que la forme des courbes (30, 60, 70, 80) est une ellipse.

6. Elément de pavé selon la revendication 1 caractérisé par le fait que la forme des courbes (30, 60, 70, 80) est une hyperbole.

7. Elément de pavé ou élément en forme de pavé selon la revendication 1 caractérisé par le fait que la forme des courbes est logarithmique.

## Patentansprüche

1. Selbsthemmendes Pflasterelement, das für die Herstellung einer Verkehrsfläche, Schutzfläche von Böschungen bzw. Abdachungen und dekorativen Mauern bestimmt ist, von denen das genannte Element eine axiale Symmetrie aufweist und aus einem Kopf gebildet ist, der sich an zwei Verbindungslaschen anschließt, von denen die Richtungen (40) (DF) und (DJ) um 45° bezüglich der Symmetrieachse (50) (BDH) des Kopfes geneigt sind, und von dem die Seitenfläche des Kopfes eine konvexe und zylindrische Form (30) aufweist, wobei die Kontur einer jeden Verbindungslasche aus zwei konkaven und zylindrischen Flächen (60, 70) und einer dritten Fläche (80) gebildet ist, am Ende einer jeden lasche, die die beiden vorhergehenden Flächen an jedem ihrer Enden verbindet; wobei die Basiskurve des Zylinders (60), der einen Bereich der Kontur der Verbindungslasche bildet, identisch ist zum ersten Bereich der Kurve der Basis des Zylinders (30) IHG = LBM, die die Kontur des Kopfes bildet; wobei die Basiskurve des Zylinders (70), die einen anderen Bereich der Kontur einer Verbindungslasche bildet, identisch ist zu einem zweiten Kurvenbereich der Basis des Zylinders (30), wobei KC = CL und EA = AM die Kontur des Kopfes bilden, dadurch gekennzeichnet, daß die dritte Fläche (80) zylindrisch ist und die Basiskurven (30), (60), (70) und (80) die die Kontur einer jeden Verbindungslasche und die Kontur des Kopfes bilden, aus unterschiedlichen Kurven von veränderbarem Kurvenradius erzeugt sein können, deren Form eine relative Drehung der beiden eingeschlossenen Pflasterelemente verhindert.

2. Pflasterelement nach Anspruch 1, dadurch gekennzeichnet, daß die allgemeine Form ähnlich der im vertikalen Schnitt gesehenen Form einer Tulpenblüte ist.

3. Pflasterelement oder Element in Form eines Plfasters nach Anspruch 1, dadurch gekennzeichnet, daß die Form der Kurven (30, 60, 70, 80) eine Parabel ist.

4. Pflasterelement oder Element in Form eines Pflasters nach Anspruch 1, dadurch gekennzeichnet, daß die Form der Kurven (30, 60, 70, 80) eine Sinuskurve ist.

5. Pflasterelement oder Element in Form eines Pflaster nach Anspruch 1, dadurch gekennzeichnet, daß die Form der Kurven (30, 60, 70, 80) eine Ellipse ist.

6. Pflasterelement nach Anspruch 1, dadurch gekennzeichnet, daß die Form der Kurven (30, 60, 70, 80) eine Hyperbel ist.

7. Pflasterelement oder Element in Form eines Pflasters nach Anspruch 1, dadurch gekennzeichnet, daß die Form der Kurven logarithmisch ist.

**Claims**

1. Interlocking paving element intended for the provision of a surface for traffic, for the protection ·of embankments and slopes, respectively, and of decorative walls, said element having an axial symmetry and being composed of a head communicating with two connecting tongues of which the directions (40) (DF) and (DJ) are inclined by 45° relative to the axis of symmetry (50) (BDH) of the head and of which the lateral surface of the head has a convex or cylindrical shape (30), with the contour of each connecting tongue being formed of two concave and cylindrical surfaces (60, 70), and of a third surface (80) at the end of each tongue which interconnects the two preceding surfaces at each of their ends, with the base curve of the cylinder (60), which forms a portion of the contour of the connecting tongue, being identical with a first portion of the curve of the base of the cylinder (30) IHG = LBM forming the contour of the head, with the base curve of the cylinder (70) forming a different portion of the contour of the connecting tongue being identical with a second curve portion of the base of the cylinder (30), KC = CL and EA = AM forming the contour of the head, characterized in that the third surface (80) is cylindrical and in that the base curves (30), (60), (70) and (80), forming the contour of each connecting tongue and the contour of the head, may be the result of different curves of variable curve radius whose shape prevents a relative rotation of the two enclosed paving elements.

2. The paving element according to claim 1, characterized in that the general shape resembles that of a tulip viewed vertically therethrough.

3. The paving element or element in the form of a paving according to claim 1, characterized in that the shape of the curves (30, 60, 70, 80) is a parabola.

4. The paving element or element in the form of a paving according to claim 1, characterized in that the shape of the curves (30, 60, 70, 80) is a sinusoid.

5. The paving element or element in the form of a paving according to claim 1, characterized in that the shape of the curves (30, 60, 70, 80) is that of an ellipse.

6. The paving element according to claim 1, characterized in that the shape of the curves (30, 60, 70, 80) is a hyperbola.

7. The paving element or element in the form of a paving according to claim 1, characterized in that the shape of the curves is logarithmic.

FIG . 1

FIG-2